# EUROPÄISCHE PATENTSCHRIFT

(11) **EP 2 985 585 B1**
(45) Veröffentlichungstag und Bekanntmachung des Hinweises auf die Patenterteilung: **21.06.2017**
(21) Anmeldenummer: 15180211.3
(22) Anmeldetag: 07.08.2015
(51) Int. Cl.: G01N 21/55, G01N 21/59, G01N 21/95, G01N 21/17, G01M 17/02

(54) **VERFAHREN UND VORRICHTUNG ZUM PRÜFEN EINES REIFENS**
METHOD AND DEVICE FOR TESTING A TYRE
PROCEDE ET DISPOSITIF DESTINES A LA VERIFICATION D'UN PNEU

(30) Priorität: 13.08.2014 DE 102014012095
(43) Veröffentlichungstag der Anmeldung: 17.02.2016
(73) Patentinhaber: Carl Zeiss Optotechnik GmbH, 83115 Neubeuern (DE)
(72) Erfinder: Huber, Rainer, 83451 Piding (DE)
(74) Vertreter: Zinnecker, Armin

(56) Entgegenhaltungen:
- WO-A1-2007/082371
- DE-A1- 19 625 763
- DE-A1-102011 051 071

## Beschreibung

Die Erfindung betrifft ein Verfahren zum Prüfen eines Reifens und eine Vorrichtung zur Durchführung dieses Verfahrens.

Reifen für Fahrzeuge aller Art werden aus unterschiedlichen Komponenten aufgebaut. Im allgemeinen besteht der Reifen aus einer Karkasse und einer Lauffläche. Drähte oder Fäden bilden die tragende Struktur der Karkasse. Sie werden in Schichten aus unterschiedlichen Gummisorten mit unterschiedlichen mechanischen Eigenschaften eingebettet. Ein Metallgeflecht kann als "Gürtel" die Lauffläche stabilisieren. In der Lauffläche sind unterschiedliche Schichten vorgesehen, um die gewünschten Laufeigenschaften, die gewünschte Abriebfestigkeit, die gewünschte elektrische Leitfähigkeit und den gewünschten, möglichst geringen Rollwiderstand zu gewährleisten.

Im Fertigungsprozeß des Reifens werden Rohlinge aus den einzelnen Komponenten unter hohen Drücken und Temperaturen in eine spezifische Reifenform gepresst. Dabei müssen die einzelnen Komponenten an den richtigen Stellen im fertigen Reifen ausvulkanisieren. Um dies zu überprüfen können einzelne Reifen im Wege einer Stichprobe zerstörend geprüft werden. Auch eine zerstörungsfreie Reifenprüfung ist möglich, insbesondere durch Röntgenapparate und Computertomographen. Diese Geräte sind allerdings teuer. Sie liefern auch nur eingeschränkte Ergebnisse, da verschiedene Gummisorten mit ihnen kaum oder nicht unterschieden werden können.

Ein Verfahren, nach dem Oberbegriff des Anspruchs 1 ist aus der DE 196 25 763 A1 bekannt.

Die DE 10 2011 051 071 A1 offenbart ein Verfahren zur Herstellung faserverstärkter Formteile, bei dem elektromagnetische Strahlung im THz-Frequenzbereich verwendet wird.

Aus der WO 2007/082371 A1 ist ein Verfahren zum Bestimmen der Orientierung von Fasern bekannt, bei dem elektromagnetische Strahlung im THz-Frequenzbereich verwendet wird.

Aufgabe der Erfindung ist es, ein kostengünstiges zerstörungsfreies Verfahren zum Prüfen eines Reifens sowie eine zugehörige Vorrichtung vorzuschlagen.

Erfindungsgemäß wird diese Aufgabe bei einem Verfahren der eingangs angegebenen Art durch die Merkmale des Anspruchs 1 gelöst. Der Reifen wird mit elektromagnetischer Strahlung im THz(Terahertz)-Frequenzbereich bestrahlt, wobei die Frequenz der Strahlung 0,1 bis 2,0 THz beträgt. Die durch den Reifen hindurchgehende Strahlung und/oder die von dem Reifen reflektierte Strahlung wird empfangen und ausgewertet. Unter einem Reifen im Sinne der Erfindung ist dabei sowohl ein fertiger Reifen wie auch ein nicht vulkanisierter Reifen zu verstehen.

Erfindungsgemäß wird die Materialart des Reifens und/oder einer oder mehrerer oder aller Schichten des Reifens anhand iher optischen Dichte bestimmt.

Durch die Erfindung wird eine schnell durchzuführende und kostengünstige zerstörungsfreie Prüfmethode für Reifen geschaffen. Dadurch kann die Entwicklung von Reifen vereinfacht werden. Im Fertigungsprozeß kann eine gleichbleibend hohe Produktqualität sichergestellt werden.

Vorteilhafte Weiterbildungen sind in den Unteransprüchen beschrieben.

Die Frequenz der Strahlung beträgt vorzugsweise 0,2 bis 1,5 THz, vorzugsweise 0,2 bis 1,2 THz, vorzugsweise 0,2 bis 0,8 THz, vorzugsweise 0,3 THz.

Der Reifen kann mit elektromagnetischer Strahlung in Form eines Strahlungsimpulses bestrahlt werden. In diesem Strahlungsimpuls können eine Vielzahl von Frequenzen oder alle Frequenzen enthalten sein.

Stattdessen oder zusätzlich kann der Reifen mit elektromagnetischer Strahlung in Wellenform bestrahlt werden. Vorzugsweise wird der Reifen mit elektromagnetischer Strahlung in der Form einer sinusförmigen Welle bestrahlt.

Vorzugsweise werden die Amplitude und/oder die Laufzeit der Strahlung, die durch den Reifen hindurchgegangen ist und/oder die von dem Reifen reflektiert worden ist, ausgewertet.

Stattdessen oder zusätzlich kann das Spektrum der Strahlung, die durch den Reifen hindurchgegangen ist und/oder die von dem Reifen reflektiert worden ist, ausgewertet werden.

Eine weitere vorteilhafte Weiterbildung ist dadurch gekennzeichnet, daß der Brechungsindex und/oder der Absorptionskoeffizient und/oder die Dicke und/oder die Überlappung des Reifens und/oder einer oder mehrerer oder aller Schichten des Reifens bestimmt werden.

Nach einer weiteren vorteilhaften Weiterbildung wird die Lage einer leitfähigen Schicht in dem Reifen bestimmt. Dabei kann insbesondere festgestellt werden, ob ein leitfähiger Streifen an der Oberfläche des Reifens und/oder an der Oberfläche einer oder mehrerer oder aller Schichten des Reifens liegt. Ferner kann insbesondere festgestellt werden, ob der leitfähige Streifen von einer Seite und/oder von beiden Seiten von einer Gummischicht bedeckt ist, insbesondere von Gummischichten aus demselben Material.

Vorteilhaft ist es, wenn der Höhenschlag und/oder der Umfang des Reifens bestimmt werden. Unter dem Höhenschlag ist dabei eine Abweichung des Radius oder Durchmessers des Reifens in Abhängigkeit vom Umfang des Reifens zu verstehen.

Eine weitere vorteilhafte Weiterbildung ist dadurch gekennzeichnet, daß die Lage und/oder der Abstand von einem oder mehreren Fäden und/oder Drähten voneinander und/oder von einer oder beiden Oberflächen des Reifens und/oder von einer oder mehreren oder allen Schichten des Reifens bestimmt werden.

Nach einer weiteren vorteilhaften Weiterbildung werden Fehlstellen in dem Reifen und/oder in einer oder mehreren oder allen Schichten des Reifens bestimmt. Bei den Fehlstellen kann es sich insbesondere um Fremdkörper und/oder Lufteinschlüsse und/oder Luftblasen handeln.

Der Reifen kann von einer Seite bestrahlt werden. Es ist allerdings auch möglich, daß der Reifen von zwei einander gegenüberliegenden Seiten bestrahlt wird.

Nach einer weiteren vorteilhaften Weiterbildung wird die Strahlung, die durch den Reifen hindurchgegangen ist und/oder die von dem Reifen reflektiert worden ist, von einem oder mehreren Sensoren empfangen. Die mehreren Sensoren sind vorzugsweise in einem flächenförmigen Array angeordnet.

Vorteilhaft ist es, wenn die Lage der Strahlung relativ zum Reifen veränderbar ist. Hierfür kann der Reifen gegenüber der Strahlungsquelle beweglich sein. Stattdessen oder zusätzlich kann die Strahlungsquelle gegenüber dem Reifen beweglich sein. Als Bewegungsvorrichtungen sind Drehachsen, Achssysteme und/oder Roboter besonders geeignet.

Eine weitere vorteilhafte Weiterbildung ist dadurch gekennzeichnet, daß bei der Auswertung der Strahlung eine 2D-Darstellung und/oder eine 3D-Darstellung des Reifens und/oder einer oder mehrerer oder aller Schichten des Reifens hergestellt wird. Die 2D-Darstellung und/oder die 3D-Darstellung können gespeichert und/oder ausgewertet und/oder weiterverarbeitet werden.

Die der Erfindung zugrundeliegende Aufgabe wird ferner durch eine Vorrichtung nach Anspruch 12 gelöst. Die erfindungsgemäße Vorrichtung zur Durchführung des erfindungsgemäßen Verfahrens umfaßt eine Strahlungsquelle für elektromagnetische Strahlung im THz-Frequenzbereich, wobei die Frequenz der Strahlung 0,1 bis 2,0 THz beträgt, eine Empfangseinrichtung zum Empfangen der durch den Reifen hindurchgegangenen Strahlung und/oder der von dem Reifen reflektierten Strahlung und eine Auswerteeinrichtung zum Auswerten der empfangenen Strahlung und zum Bestimmen der Materialart des Reifens und/oder einer oder mehrerer oder aller Schichten des Reifens anhand ihrer optischen Dichte. Die Auswerteeinrichtung kann von einem Rechner gebildet werden, insbesondere von einem PC.

Nach einer weiteren vorteilhaften Weiterbildung umfaßt die Empfangseinrichtung einen oder mehrere Sensoren. Die mehreren Sensoren sind vorzugsweise in einem linienförmigen oder fächenförmigen Array angeordnet.

Vorteilhaft ist es, wenn die Vorrichtung eine Bewegungsvorrichtung zum Bewegen des Reifens und/oder der Strahlungsquelle relativ zueinander umfaßt, insbesondere eine Drehachse, ein Achssystem und/oder einen Roboter.

Vorteilhaft ist es, wenn die Vorrichtung eine weitere erfindungsgemäße Vorrichtung umfaßt, die auf der gegenüberliegenden Seite des Reifens angeordnet ist.

Ausführungsbeispiele der Erfindung werden nachstehend anhand der beigefügten Zeichnung im einzelnen erläutert. In der Zeichnung zeigt
- Fig. 1: ein Ausführungsbeispiel einer Vorrichtung zum Prüfen eines Reifens mit einer Strahlungsquelle für elektromagnetische Strahlung im THz-Frequenzbereich und einer Empfangseinrichtung zum Empfangen der von einem Reifen reflektierten Strahlung in einer schematischen Seitenansicht, teilweise im Schnitt,
- Fig. 2: eine Abwandlung der Ausführungsform gemäß Fig. 1, bei der die Strahlungsquelle und die Empfangseinrichtung im Inneren des Reifens angeordnet sind,
- Fig. 3: eine weitere Abwandlung der Vorrichtungen gemäß Fig. 1 und 2, bei der zwei Vorrichtungen mit jeweils einer Strahlungsquelle und jeweils einer Empfangseinrichtung auf gegenüberliegenden Seiten des Reifens angeordnet sind,
- Fig. 13: eine Abwandlung der in Fig. 1 dargestellten Vorrichtung mit einem halbdurchlässigen Spiegel.

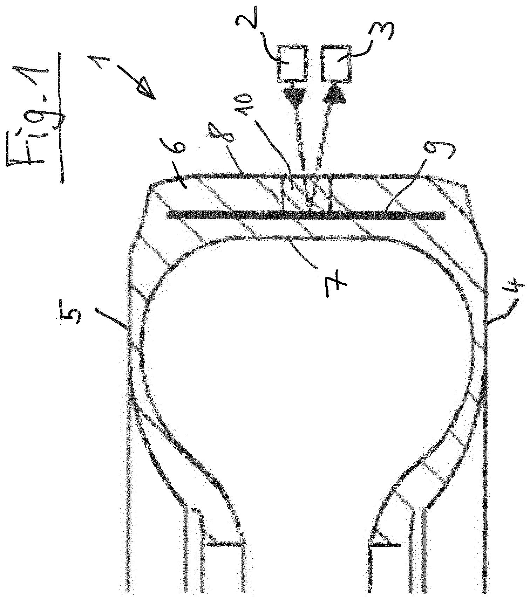

Die Fig. 1 zeigt eine Vorrichtung zum Prüfen eines Reifens 1, die eine Strahlungsquelle 2 für elektromagnetische Strahlung im THz-Frequenzbereich und eine Empfangseinrichtung 3 zum Empfangen der von dem Reifen 1 reflektierten Strahlung umfaßt. Die Vorrichtung umfaßt ferner eine Auswerteeinrichtung zum Auswerten der von der Empfangseinrichtung 3 empfangenen Strahlung (in der Zeichnung nicht dargestellt).

Der Reifen umfaßt eine untere Seitenfläche 4, eine obere Seitenfläche 5 und eine Lauffläche 6, die von einer inneren Lauffläche 7 und einer äußeren Lauffläche 8 begrenzt wird. Innerhalb der Lauffläche 6 können mehrere Schichten vorhanden sein. In der Mitte der Lauffläche 6 befindet sich eine elektrisch leitende Schicht 9. Diese elektrisch leitende Schicht 9 ist der metallische Gürtel des Reifens 1. Sie stellt für THz-Strahlung einen Spiegel dar. Ferner befindet sich in der Lauffläche 6 ein Mittelsteg 10, der aus einem elektrisch gut leitenden Gummi besteht. Durch den Mittelsteg 10 soll eine elektrostatische Aufladung des Reifens verhindert werden. Er ist zwischen der elektrisch leitenden Schicht 9 und der äußeren Lauffläche 8 angeordnet. Der Mittelsteg 10 verbindet die äußere Lauffläche 8 mit der elektrisch leitenden Schicht 9. Er erstreckt sich nur über einen Teil der Höhe des Reifens 1.

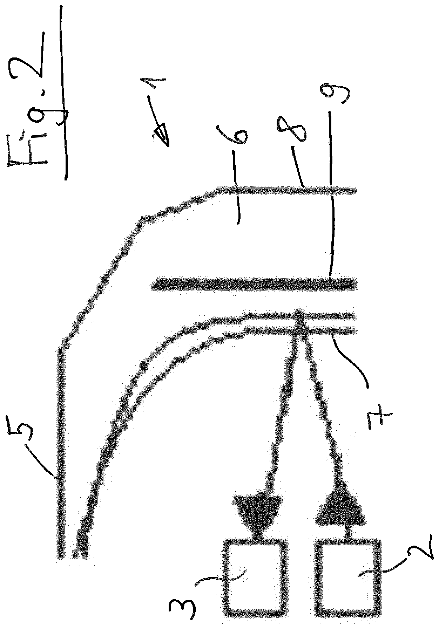

Bei der abgewandelten Ausführungsform nach Fig. 2 sind die Strahlungsquelle 2 und die Empfangseinrichtung 3 nicht an der Außenseite des Reifens 1, sondern im Inneren des Reifens 1 angeordnet.

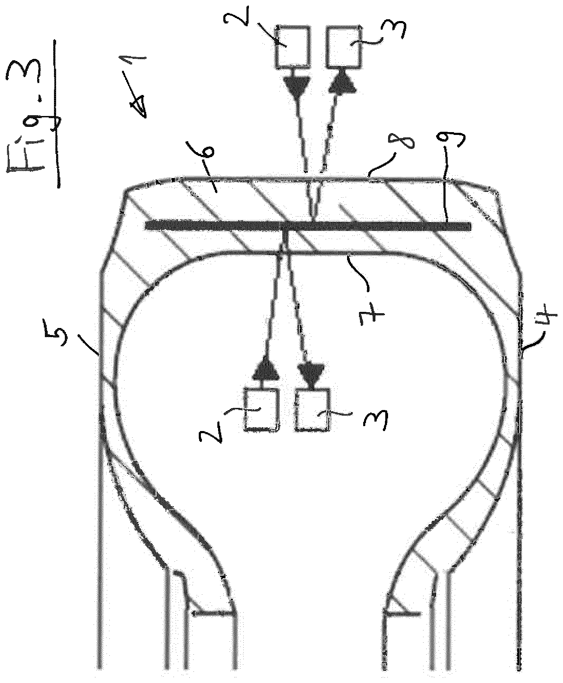

Bei der Ausführungsform nach Fig. 3 werden die beiden Ausführungsformen nach Fig. 1 und 2 kombiniert. Die Vorrichtungen zum Prüfen des Reifens, die jeweils eine Strahlungsquelle 2 und eine Empfangseinrichtung 3 aufweisen, befinden sich auf gegenüberliegenden Seiten der Lauffläche 6 des Reifens 1. Eine dieser Vorrichtungen ist auf der Außenseite des Reifens 1 angeordnet, die andere Vorrichtung ist im Inneren des Reifens 1 angeordnet. Die Vorrichtungen liegen zu beiden Seiten der Lauffläche 6.

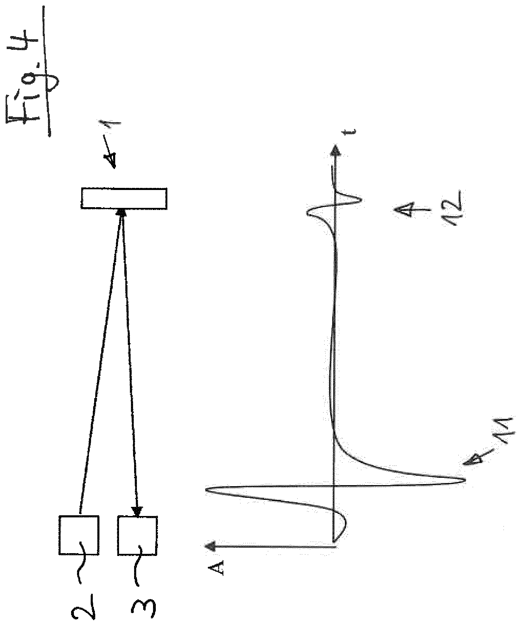

Die Ausführungsformen nach Fig. 1, 2 und 3 arbeiten jeweils mit Auflicht. Hier liegen die Strahlungsquelle 2 und die Empfangseinrichtung 3 jeweils auf derselben Seite des Reifens 1. In Fig. 4 ist der zugehörige Impulsverlauf dargestellt. Von der Strahlungsquelle 2 wird elektromagnetische Strahlung im THz-Frequenzbereich in Form eines Strahlungspulses 11 abgestrahlt. Der untere Teil der Fig. 4 zeigt den Verlauf der Amplitude A der elektromagnetischen Strahlung über der Zeit t. Der abgestrahlte Strahlungsimpuls besteht aus einer kleinen negativen Amplitude, einer daran anschließenden, kurzzeitigen hohen positiven Amplitude, einer daran anschließenden, kurzzeitigen hohen negativen Amplitude und einem Ausschwingen auf die Nullinie.

Im rechten Teil der Fig. 4 ist der zugehörige Strahlungsimpuls 12 dargestellt, der von der Empfangseinrichtung 3 empfangen wird, nachdem die von der Strahlungsquelle 2 ausgehende Strahlung von dem Reifen 1 reflektiert und von der Empfangseinrichtung 3 empfangen worden ist. Wie aus Fig. 4 ersichtlich ist das Signal an der Empfangseinrichtung 3 zeitlich verzögert und in der Amplitude A abgeschwächt. Aus der Amplitude und/oder dem Amplitudenverhältnis zwischen empfangener Strahlung und ausgesendeter Strahlung und/oder aus der Laufzeit und/oder aus der Phase und/oder aus dem Phasenunterschied kann auf Eigenschaften des Reifens 1 und/oder einer oder mehrerer oder aller Schichten des Reifens 1 geschlossen werden.

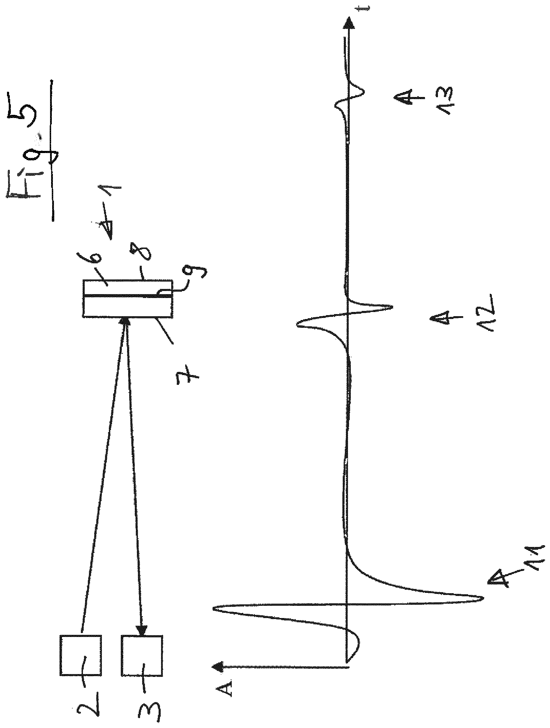

Fig. 5 zeigt eine der Fig. 4 entsprechende Anordnung mit einem anderen Reifen 1. Hier wird ein Reifen 1 mit einem Schichtaufbau wie in dem Reifen 1, der in Fig. 1, 2 und 3 dargestellt ist, geprüft. Zu diesem Schichtaufbau gehört der Amplitudenverlauf, der im unteren Teil der Fig. 5 gezeigt ist. Auch hier wird ein Strahlungsimpuls 11 ausgesendet. Von der Empfangseinrichtung 3 werden ein erster Strahlungsimpuls 12 und ein zweiter Strahlungsimpuls 13 empfangen. Aus diesen Strahlungsimpulsen 12, 13, insbesondere aus den Amplitudenverläufen, den Amplitudenverhältnissen, den Zeitdauern, den Phasen und/oder den Phasenunterschieden kann auf Eigenschaften des Reifens 1 und/oder einer oder mehrerer oder aller Schichten des Reifens 1 geschlossen werden.

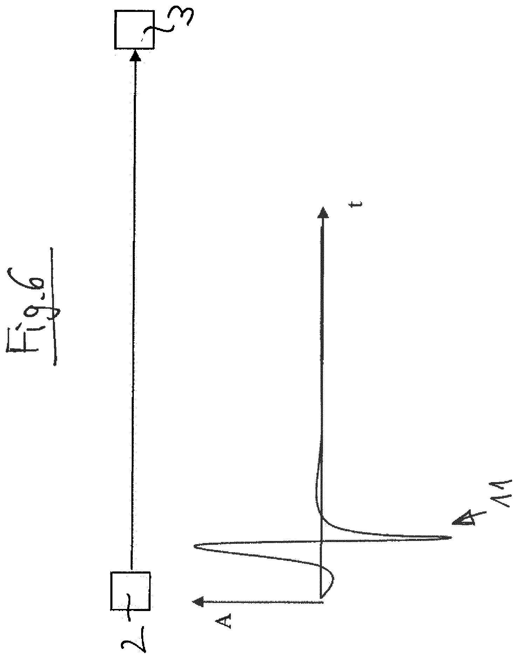

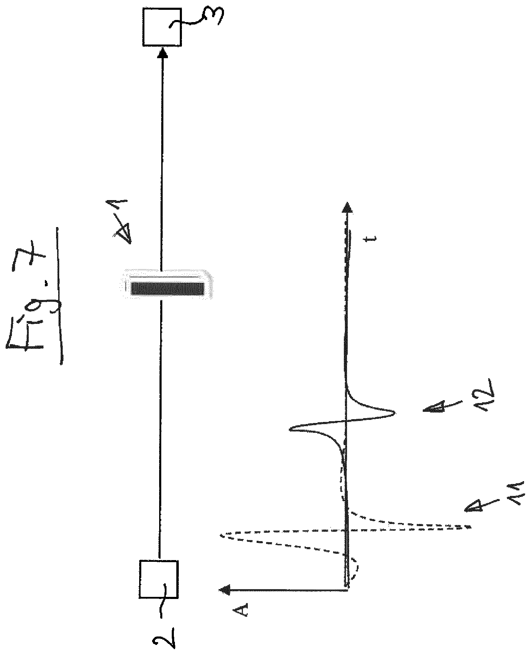

Fig. 6 und 7 zeigen eine Ausführungsform, die mit Durchlicht arbeitet, bei der also die Strahlungsquelle 2 und die Empfangseinrichtung 3 auf verschiedenen Seiten des Reifens 1 liegen und bei der die Empfangseinrichtung 3 die durch den Reifen 1 hindurchgehende Strahlung empfängt. Bei der Darstellung der Fig. 6 ist kein Reifen vorhanden. Der von der Strahlungsquelle 2 ausgehende Strahlungsimpuls 11 erzeugt also denselben Strahlungsimpuls 11 in der Empfangseinrichtung 3, und zwar praktisch ohne zeitliche Verzögerung.

In der Darstellung der Fig. 7 befindet sich zwischen der Strahlungsquelle 2 und der Empfangseinrichtung 3 der Reifen 1. Hier erzeugt der Strahlungsimpuls 11, der von der Strahlungsquelle 2 ausgeht, den Strahlungsimpuls 12 in der Empfangseinrichtung 3. Der empfangene Strahlungsimpuls 12 wird ausgewertet.

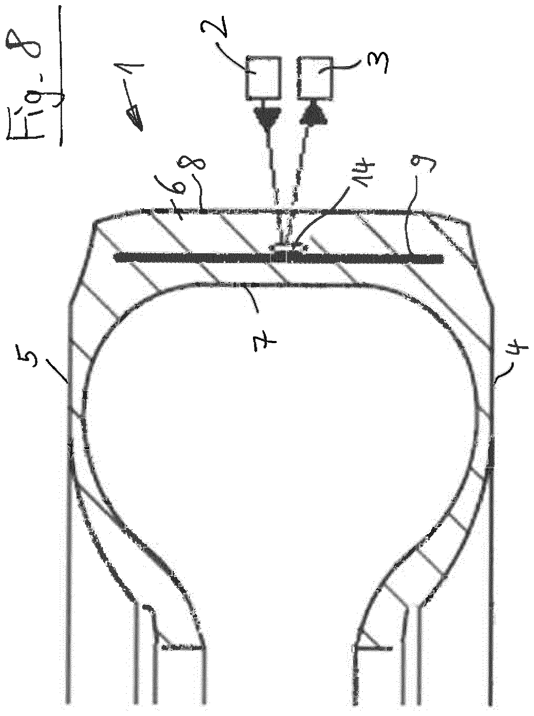

Fig. 8 zeigt die in Fig. 1 dargestellte Vorrichtung. Hier befindet sich in der Lauffläche 6 des Reifens 1 eine Fehlstelle 14, die von der Vorrichtung bestimmt werden kann. Bei der Fehlstelle 14 handelt es sich um einen Lufteinschluß.

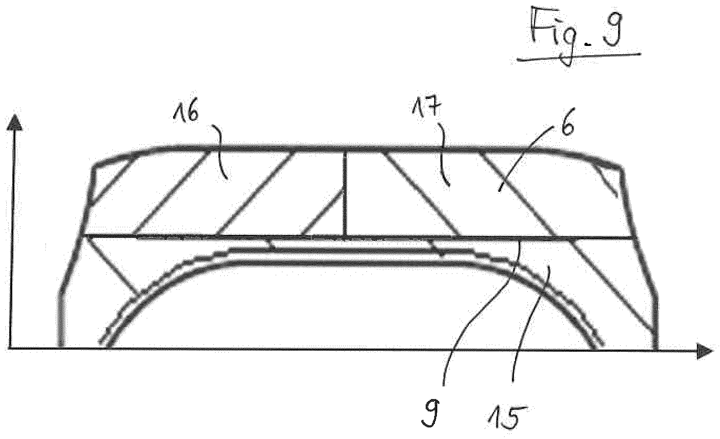

Fig. 9 zeigt einen Querschnitt durch einen Reifen, bei dem die Lauffläche 6 einen inneren, durchgehenden Bereich 15, einen ersten äußeren Bereich 16 und einen zweiten äußeren Bereich 17 aufweist. Der innere Bereich 15 und die äußeren Bereiche 16, 17 sind durch eine leitfähige Schicht 9 voneinander getrennt.

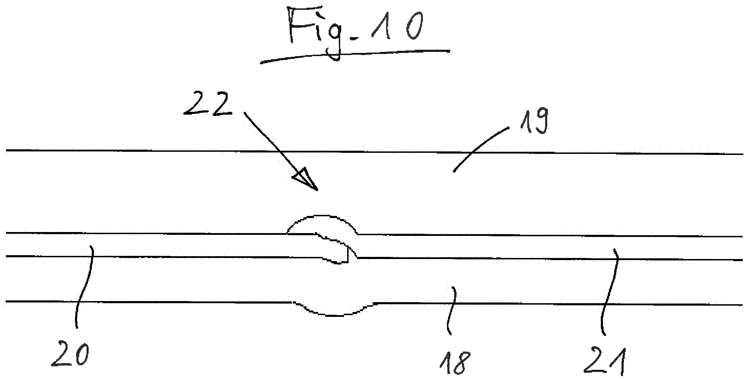

In Fig. 10 ist ein Längsschnitt durch einen Reifen mit einer inneren, durchgehenden Schicht 18 und einer äußeren, durchgehenden Schicht 19 dargestellt. Zwischen diesen Schichten 18, 19 ist eine erste mittlere Schicht 20 und eine zweite mittlere Schicht 21 vorhanden, die in einem Überlappungsbereich 22 miteinander verbunden sind. Durch die erfindungsgemäße Vorrichtung können Eigenschaften und/oder Ausmaße des Überlappungsbereichs 22 bestimmt werden.

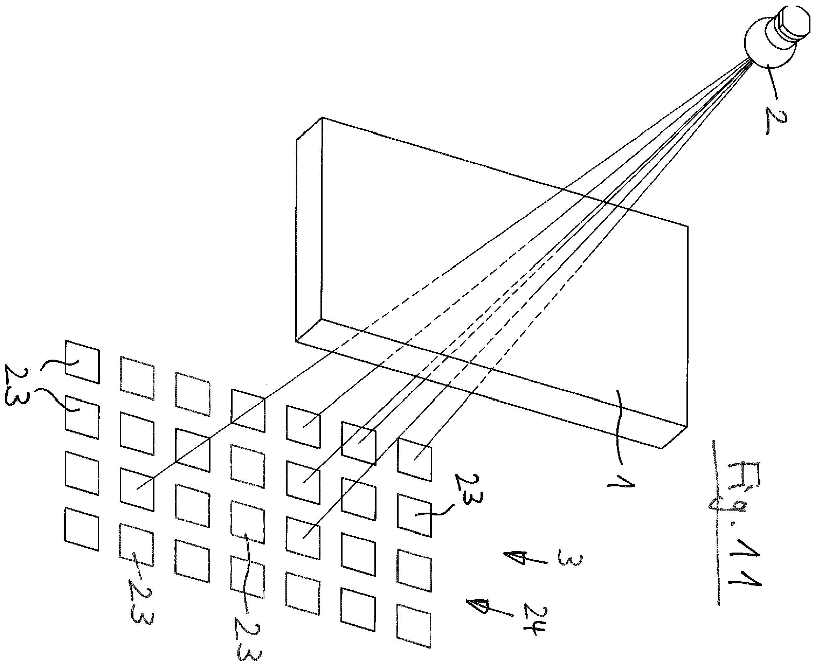

Fig. 11 zeigt einen Teil einer Ausführungsform mit einer Strahlungsquelle 2 für elektromagnetische Strahlung im THz-Frequenzbereich und eine Empfangseinrichtung 3, die mehrere Sensoren 23 aufweist. Es handelt sich um eine Vielzahl von Sensoren 23, die in einem flächenförmigen Array 24 angeordnet sind. Zwischen der Strahlungsquelle 2 und dem Array 24 befindet sich ein Teil des Reifens 1. Die Vorrichtung gemäß Fig. 4 arbeitet mit Durchlicht.

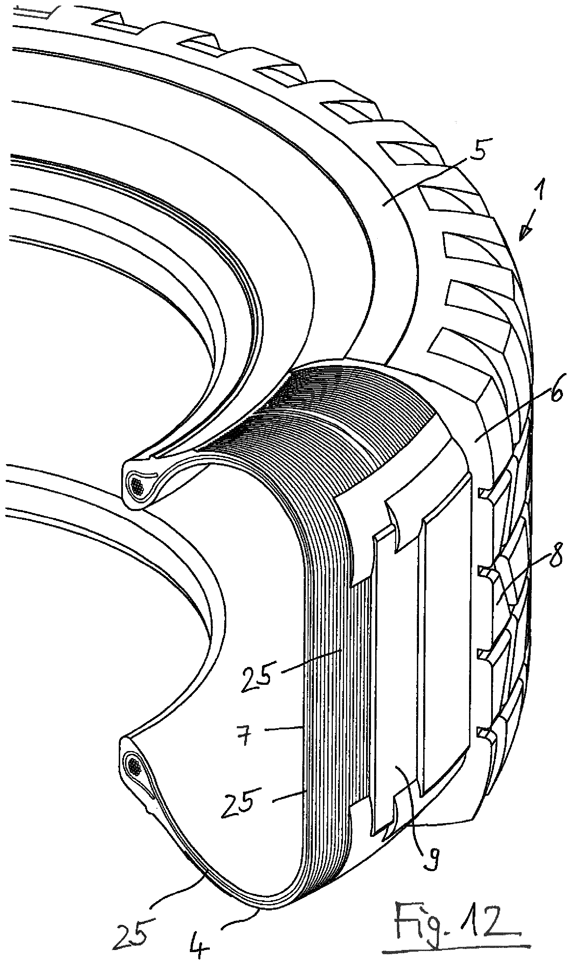

Fig. 12 zeigt einen Schnitt durch einen Reifen 1 in einer perspektivischen Darstellung. In der Lauffläche 6 sind Karkassenfäden 25 vorhanden, die in radialer Richtung verlaufen. Die Karkassenfäden 25 verlaufen parallel zueinander und im Abstand voneinander. Sie können durch das erfindungsgemäße Verfahren bestimmt werden. Insbesondere ist es möglich, den Abstand der Karkassenfäden 25 voneinander und/oder von der inneren Lauffläche 7 und/oder von der äußeren Lauffläche 8 zu bestimmen.

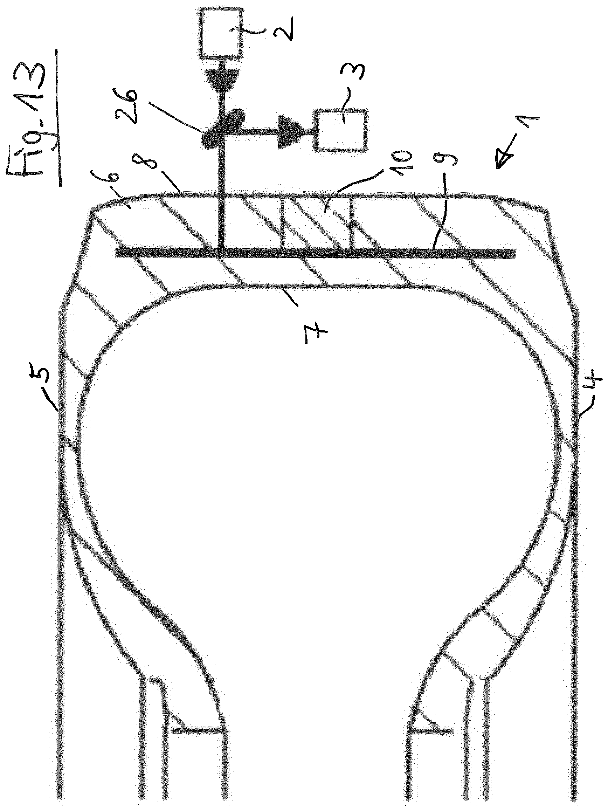

Fig. 13 zeigt eine Abwandlung der in Fig. 1 dargestellten Vorrichtung, bei der entsprechende Bauteile mit denselben Bezugszeichen versehen sind und nicht erneut beschrieben werden. Hier ist im Strahlengang von der Strahlungsquelle 2 zu dem Reifen 1 ein halbdurchlässiger Spiegel 26 angeordnet. Ein Teil der von der Strahlungsquelle 2 ausgehenden THz-Strahlung wird auf den Reifen 1 gestrahlt. Die von dem Reifen 1 reflektierte Strahlung wird von dem halbdurchlässigen Spiegel 26 teilweise zu der Empfangseinrichtung 3 gespiegelt und dort empfangen.

Durch die Erfindung wird es ermöglicht, in dem Reifen, insbesondere in dessen Lauffläche und/oder in dessen restlichem Reifenaufbau, unterschiedliche Bestandteile zu erkennen, insbesondere unterschiedliche Gummiarten. Es ist möglich, deren Lage und/oder Stärke zu messen und/oder grafisch darzustellen. Gleiches gilt für metallische Bestandteile des Reifens. Auch eine geometrische Vermessung des Reifens und seiner Bestandteile ist möglich, insbesondere des Höhenschlags, der Dicke, des Umfangs und/oder einer Lagenüberlappung von Reifen und/oder Einzelschichten des Reifens. Es ist möglich, den Abstand einzelner Fäden und/oder Drähte, die sich in dem Reifen befinden, zu bestimmen und zu bewerten, und zwar sowohl den Abstand der Fäden und/oder Drähte voneinander wie auch den Abstand der Fäden und/oder Drähte von der Reifenoberfläche. Die Erfindung ermöglicht ferner eine automatische Auswertung der gefundenen Ergebnisse.

Die Erfindung ermöglicht ein Identifizieren unterschiedlicher Bestandteile in Reifen, insbesondere Gummireifen, mit einem THz-Spektrometer in Reflexionsanordnung und/oder mit Durchlicht anhand ihrer unterschiedlichen optischen Eigenschaften, insbesondere anhand der optischen Dichte und Absorption. Durch diese unterschiedlichen optischen Eigenschaften ergeben sich materialtypische Signale am Empfänger des THz-Spektrometers, die zur Materialbestimmung verwendet werden können. Wenn ein Reifen eine oder mehrere Metallschichten enthält, die für THz-Strahlen "undurchsichtig" sind, empfiehlt sich eine getrennte Untersuchung des Reifenaufbaus von beiden Seiten des Metalls, also von verschiedenen Seiten des Reifens. In dem Reifen kann die Existenz unterschiedlicher Materialien erkannt werden und deren Position und Dicke können gemessen werden.

Die Prüfung des Reifens kann am liegenden Reifen erfolgen, allerdings auch am stehenden oder hängenden Reifen. Dabei ist die gesamte zu prüfende Reifenoberfläche für eine simultane Prüfung zugänglich.

Der Reifen kann mit einem Punktsensor untersucht werden. Es ist allerdings auch möglich, eine Vielzahl von Sensoren zu verwenden, die in einem linienförmigen oder flächenförmigen Array angeordnet sind. Der oder die Sensoren können mit einem speziellen Achssystem oder mit einem Roboter am Reifen entlang bewegt werden, um den ganzen Reifen zu vermessen. Stattdessen oder zusätzlich kann auch der Reifen bewegt werden. Er kann insbesondere um seine Laufachse gedreht werden.

Die Messungen können sowohl mit einem THz-Puls als auch mit einer Welle, insbesondere einer sinusförmigen Welle als Anregung durchgeführt werden. Bei Puls-Systemen spricht man von Zeitbereichs-Spektrometern, bei Systemen mit Wellen von Frequenzbereichs-Spektrometern. Es gibt Geräte, die sowohl die Amplitude wie auch die Laufzeit des Signals erfassen und solche, die nur die Amplitude bestimmen können. Die zuletzt genannten Geräte sind kostengünstiger, können aber insbesondere nicht zur Schichtdickenmessung verwendet werden, sondern lediglich anzeigen, ob bestimmte Materialien vorhanden sind.

Zur spektralen Analyse können Laufzeit und Amplitudendämpfung relativ zu einem Referenzsignal ermittelt und ausgewertet werden. Bei Durchlichtanordnungen kann das Referenzsignal von einem Puls gebildet werden, der nur Luft und keinen Reifen durchlaufen hat. Bei Auflichtanordnungen kann das Referenzsignal durch einen Reflex von einem idealen Reflektor gebildet werden, beispielsweise von einer Metallplatte.

Durch Fouriertransformation kann das gemessene Zeitsignal in die Frequenzdomäne umgerechnet werden. Die Amplitude findet man im Frequenzraum in Form einer frequenzabhängigen Amplitude wieder, also in Form eines Amplitudenspektrums, die Laufzeit in Form einer frequenzabhängigen Phase, also in Form eines Phasenspektrums. Zur spektralen Analyse kann die sogenannte Transferfunktion gebildet werden, also der Quotient des Probenspektrums, dividiert durch das Referenzspektrum. Aus der Transferfunktion lassen sich der frequenzabhängige Brechungsindex und der Absorptionskoeffizient der Probe bestimmen. Beide Größen sind charakteristische Materialgrößen für die Gummiproben. Der Brechungsindex ist dabei ein Maß für die optische Dichte bzw. die zeitliche Verzögerung, die die Probe verursacht hat, und der Absorptionskoeffizient ist ein Maß für die Dämpfungseigenschaften. Bei bekanntem Brechungsindex und Absorptionskoeffizient genügt zur Schichtdickenbestimmung eine Probemessung.

Um zu prüfen, ob ein leitfähiger Streifen an der Oberfläche liegt oder von einer Gummischicht bedeckt ist, werden keine Materialkenndaten benötigt. Elektrisch leitfähige Schichten sind, wie Metalle, gute Reflektoren. Gibt es im empfangenen Signal neben dem Reflex von der Oberfläche einen zweiten Reflex, dann ist die leitfähige Schicht mit Sicherheit von einer Gummischicht bedeckt. Soll auch deren Dicke bestimmt werden, muß man auch die Materialkennzahlen wissen.

Bei der Laufstreifenanalyse kann man ohne Kenntnis der Materialdaten ermitteln, ob eine Seite des Reifens aus härterem Gummi und die andere Seite des Reifens aus weicherem Gummi besteht. Ein härterer Gummi hat einen größeren Brechungsindex. Der Reflex von dieser Seite weist eine größere Amplitude auf als der Reflex von der weicheren Seite. Für eine exakte Identifikation der Gummisorte anhand der Materialparameter benötigt man wieder eine Referenzmessung und Probenmessung.

## Patentansprüche

1. Verfahren zum Prüfen eines Reifens, bei dem der Reifen (1) mit elektromagnetischer Strahlung im THz-Frequenzbereich bestrahlt (2) wird und die durch den Reifen (1) hindurchgegangene Strahlung und/oder die von dem Reifen (1) reflektierte Strahlung empfangen und ausgewertet wird,
**dadurch gekennzeichnet,**
**dass** die Frequenz der Strahlung 0,1 bis 2,0 THz beträgt und dass die Materialart des Reifens (1) und/oder einer oder mehrerer oder aller Schichten des Reifens (1) anhand ihrer optischen Dichte bestimmt wird.

2. Verfahren nach Anspruch 1, **dadurch gekennzeichnet, daß** die Frequenz der Strahlung 0,2 bis 1,5 THz beträgt, vorzugsweise 0,2 bis 1,2 THz, vorzugsweise 0,2 bis 0,8 THz, vorzugsweise 0,3 THz.

3. Verfahren nach Anspruch 1 oder 2, **dadurch gekennzeichnet, daß** der Reifen (1) mit elektromagnetischer Strahlung in Form eines Strahlungsimpulses (11) bestrahlt wird und/oder daß der Reifen (1) mit elektromagnetischer Strahlung in Wellenform bestrahlt wird, vorzugsweise mit elektromagnetischer Strahlung in der Form einer sinusförmigen Welle.

4. Verfahren nach einem der vorhergehenden Ansprüche, **dadurch gekennzeichnet, daß** die Amplitude und/oder die Laufzeit der Strahlung ausgewertet wird und/oder daß das Spektrum der Strahlung ausgewertet wird.

5. Verfahren nach einem der vorhergehenden Ansprüche, **dadurch gekennzeichnet, daß** der Brechungsindex und/oder der Absorptionskoeffizient und/oder die Dicke und/oder die Überlappung des Reifens (1) und/oder einer oder mehrerer oder aller Schichten des Reifens (1) bestimmt werden.

6. Verfahren nach einem der vorhergehenden Ansprüche, **dadurch gekennzeichnet, daß** die Lage einer leitfähigen Schicht (9) in dem Reifen (1) bestimmt wird und/oder daß der Höhenschlag und/oder der Umfang des Reifens (1) bestimmt werden.

7. Verfahren nach einem der vorhergehenden Ansprüche, **dadurch gekennzeichnet, daß** die Lage und/oder der Abstand von einem oder mehreren Fäden und/oder Drähten voneinander und/oder von einer oder beiden Oberflächen des Reifens und/oder von einer oder mehreren oder allen Schichten des Reifens bestimmt werden.

8. Verfahren nach einem der vorhergehenden Ansprüche, **dadurch gekennzeichnet, daß** Fehlstellen (14) in dem Reifen (1) und/oder in einer oder mehreren oder allen Schichten des Reifens (1) bestimmt werden.

9. Verfahren nach einem der vorhergehenden Ansprüche, **dadurch gekennzeichnet, daß** der Reifen (1) von einer Seite oder von zwei einander gegenüberliegenden Seiten bestrahlt wird und/oder daß die Strahlung von einem oder mehreren, vorzugsweise in einem flächenförmigen Array (24) angeordneten Sensoren (23) empfangen wird.

10. Verfahren nach einem der vorhergehenden Ansprüche, **dadurch gekennzeichnet, daß** die Lage der Strahlung relativ zum Reifen (1) veränderbar ist.

11. Verfahren nach einem der vorhergehenden Ansprüche, **dadurch gekennzeichnet, daß** bei der Auswertung der Strahlung eine 2D-Darstellung und/oder eine 3D-Darstellung des Reifens (1) und/oder einer oder mehrerer oder aller Schichten des Reifens (1) hergestellt wird.

12. Vorrichtung zur Durchführung des Verfahrens nach einem der Ansprüche 1 bis 11,
**gekennzeichnet durch**
eine Strahlungsquelle (2) für elektromagnetische Strahlung im THz-Frequenzbereich, wobei die Frequenz der Strahlung 0,1 bis 2,0 THz beträgt, eine Empfangseinrichtung (3) zum Empfangen der durch den Reifen (1) hindurchgegangenen Strahlung und/oder der von dem Reifen (1) reflektierten Strahlung und eine Auswerteeinrichtung zum Auswerten der empfangenen Strahlung und zum Bestimmen der Materialart des Reifens (1) und/oder einer oder mehrerer oder aller Schichten des Reifens (1) anhand ihrer optischen Dichte.

13. Vorrichtung nach Anspruch 12, **dadurch gekennzeichnet, daß** die Empfangseinrichtung (3) einen oder mehrere Sensoren (23), die vorzugsweise in einem linienförmigen oder flächenförmigen Array (24) angeordnet sind, umfaßt.

14. Vorrichtung nach Anspruch 12 oder 13, **gekennzeichnet durch** eine Bewegungsvorrichtung zum Bewegen des Reifens (1) und/oder der Strahlungsquelle (2) relativ zueinander.

15. Vorrichtung nach einem der Ansprüche 12 bis 14, **gekennzeichnet durch** eine weitere Vorrichtung nach Anspruch 12, die auf der gegenüberliegenden Seite des Reifens (1) angeordnet ist.

## Claims

1. A method for testing a tire, comprising: irradiating (2) the tire (1) with electromagnetic radiation in the THz frequency range, and receiving and evaluating radiation that has passed through the tire (1) and/or radiation that has been reflected by the tire (1),
**characterized in that**
the frequency of the radiation is between 0.1 to 2.0 THz; and the material type of the tire (1) and/or of one or more layers of the tire (1) or of all layers of the tire (1) is determined from its optical density.

2. The method according to claim 1, wherein the frequency of the radiation is between 0.2 to 1.5 THz, preferably 0.2 to 1.2 THz, preferably 0.2 to 0.8 THz, preferably 0.3 THz.

3. The method according to claim 1 or claim 2, wherein the tire (1) is irradiated with electromagnetic radiation in the form of a radiation pulse (11) and/or the tire (1) is irradiated with electromagnetic radiation in wave form, preferably with electromagnetic radiation in the form of a sinusoidal wave.

4. The method according to one of the preceding claims, wherein the amplitude and/or travel time of the radiation is evaluated and/or wherein the spectrum of the radiation is evaluated.

5. The method according to one of the preceding claims, wherein the refractive index and/or the absorption coefficient and/or the thickness and/or the overlapping of the tire (1) and/or of one or more layers of the tire (1) or of all layers of the tire (2) are determined.

6. The method according to one of the preceding claims, wherein the position of a conductive layer (9) in the tire (1) is determined and/or the radial runout and/or the circumference of the tire (1) are determined.

7. The method according to one of the preceding claims, wherein the position and/or the distance of one or more threads and/or wires from one another and/or from one surface or both surfaces of the tire and/or from one or more layers of the tire or all layers of the tire are determined.

8. The method according to one of the preceding claims, wherein flaws (14) in the tire (1) and/or in one or more layers of the tire (1) or all layers of the tire (1) are determined.

9. The method according to one of the preceding claims, wherein the tire (1) is irradiated from one side or from two mutually opposite sides and/or the radiation is received by one or more sensors (23) that are preferably arranged in a planar array (24).

10. The method according to one of the preceding claims, wherein the position of the radiation relative to the tire can be changed.

11. The method according to one of the preceding claims, wherein the evaluating of the radiation includes producing a 2D representation and/or a 3D representation of the tire (1) and/or of one or more layers of the tire (1) or of all layers of the tire (1).

12. An apparatus for carrying out the method according to one of the claims 1 to 11,
**characterized by**
a radiation source (2) for electromagnetic radiation in the THz frequency range, wherein the frequency of the radiation is between 0.1 to 2.0 THz; a receiving device (3) for receiving one of the radiation that has passed through the tire (1) and the radiation that has been reflected by the tire (1); and an evaluation device for evaluating the received radiation and for determining the material type of the tire (1) and/or of one or more layers of the tire (1) or all layers of the tire (1) from its optical density.

13. An apparatus according to claim 12, wherein the receiving device (3) comprises one or more sensors (23) that are preferably arranged in a linear or a planar array (24).

14. An apparatus according to claim 12 or 13, **characterized by** a moving device for moving the tire (1) and/or the radiation source (2) relative to one another.

15. An apparatus according to one of the claims 12 to 14, **characterized by** a further apparatus according to claim 12 that is arranged on the opposite side of the tire (1).

## Revendications

1. Procédé destiné à la vérification d'un pneu, dans lequel le pneu (1) est exposé (2) à un rayonnement électromagnétique dans le domaine des fréquences THz et le rayonnement ayant traversé le pneu (1) et/ou le rayonnement réfléchi par le pneu (1) est reçu et évalué,
**caractérisé en ce que**
la fréquence du rayonnement est de 0,1 à 2,0 THz et **en ce que** le type de matériau du pneu (1) et/ou d'une ou de plusieurs ou de toutes les couches du pneu (1) est déterminé sur la base de sa densité optique.

2. Procédé selon la revendication 1, **caractérisé en ce que** la fréquence du rayonnement est de 0,2 à 1,5 THz, de préférence de 0,2 à 1,2 THz, de préférence de 0,2 à 0,8 THz, de préférence de 0,3 THz.

3. Procédé selon la revendication 1 ou 2, **caractérisé en ce que** le pneu (1) est exposé à un rayonnement électromagnétique sous la forme d'une impulsion de rayonnement (11) et/ou **en ce que** le pneu (1) est exposé à un rayonnement électromagnétique en forme d'onde, de préférence à un rayonnement électromagnétique sous la forme d'une onde sinusoïdale.

4. Procédé selon l'une des revendications précédentes, **caractérisé en ce que** l'amplitude et/ou le temps de propagation du rayonnement est évalué(e) et/ou **en ce que** le spectre du rayonnement est évalué.

5. Procédé selon l'une des revendications précédentes, **caractérisé en ce que** l'indice de réfraction et/ou le coefficient d'absorption et/ou l'épaisseur et/ou le chevauchement du pneu (1) et/ou d'une ou de plusieurs ou de toutes les couches du pneu (1) sont déterminés.

6. Procédé selon l'une des revendications précédentes, **caractérisé en ce que** la position d'une couche conductrice (9) dans le pneu (1) est déterminée et/ou **en ce que** le faux-rond et/ou la circonférence du pneu (1) est déterminé(e).

7. Procédé selon l'une des revendications précédentes, **caractérisé en ce que** la position et/ou l'écart d'un ou de plusieurs fils textiles et/ou fils métalliques entre eux et/ou d'une ou des deux surfaces du pneu et/ou d'une ou de plusieurs ou de toutes les couches du pneu sont déterminés.

8. Procédé selon l'une des revendications précédentes, **caractérisé en ce que** des défauts (14) dans le pneu (1) et/ou dans une ou plusieurs ou toutes les couches du pneu (1) sont déterminés.

9. Procédé selon l'une des revendications précédentes, **caractérisé en ce que** le pneu (1) est exposé d'un côté ou de deux côtés opposés l'un à l'autre et/ou **en ce que** le rayonnement est reçu par un ou plusieurs capteurs (23), de préférence disposés en un groupement (24) planiforme.

10. Procédé selon l'une des revendications précédentes, **caractérisé en ce que** la position du rayonnement par rapport au pneu (1) peut être modifiée.

11. Procédé selon l'une des revendications précédentes, **caractérisé en ce que**, lors de l'évaluation du rayonnement, une représentation 2D et/ou une représentation 3D du pneu (1) et/ou d'une ou de plusieurs ou de toutes les couches du pneu (1) est créée.

12. Dispositif destiné à exécuter le procédé selon l'une des revendications 1 à 11, **caractérisé par**
une source de rayonnement (2) pour un rayonnement électromagnétique dans le domaine des fréquences THz, la fréquence du rayonnement étant de 0,1 à 2,0 THz, un dispositif de réception (3) destiné à recevoir le rayonnement ayant traversé le pneu (1) et/ou le rayonnement réfléchi par le pneu (1) et un dispositif d'évaluation destiné à évaluer le rayonnement reçu et à déterminer le type de matériau du pneu (1) et/ou d'une ou de plusieurs ou de toutes les couches du pneu (1) sur la base de sa densité optique.

13. Dispositif selon la revendication 12, **caractérisé en ce que** le dispositif de réception (3) comprend un ou plusieurs capteurs (23), qui sont disposés de préférence en un groupement (24) linéaire ou planiforme.

14. Dispositif selon la revendication 12 ou 13, **caractérisé par** un dispositif de déplacement destiné à déplacer le pneu (1) et/ou la source de rayonnement (2) l'un par rapport à l'autre.

15. Dispositif selon l'une des revendications 12 à 14, **caractérisé par** un autre dispositif selon la revendication 12, qui est disposé du côté opposé du pneu (1).
